# EUROPEAN PATENT SPECIFICATION

(11) **EP 3 858 706 B1**
(45) Date of publication and mention of the grant of the patent: **14.12.2022**
(21) Application number: 21153730.3
(22) Date of filing: 27.01.2021
(51) Int. Cl.: B62B 3/00, B62B 5/00, B62B 5/02, B62B 5/04, B62B 7/04, B62B 9/00, B62B 9/02, B62B 9/08

(54) **STROLLER AND OPERATION METHOD THEREOF**
KINDERWAGEN UND BETRIEBSVERFAHREN DAFÜR
POUSSETTE ET SON PROCÉDÉ DE FONCTIONNEMENT

(30) Priority: 28.01.2020 KR 20200010003
(43) Date of publication of application: 04.08.2021
(73) Proprietor: LG Electronics Inc., Seoul 07336 (KR)
(72) Inventor: LEE, Younsung, 06772 Seoul (KR); LEE, Soomi, 06772 Seoul (KR); KOH, Sunggyu, 06772 Seoul (KR); SON, Hyojun, 06772 Seoul (KR)
(74) Representative: Vossius & Partner Patentanwälte Rechtsanwälte mbB

(56) References cited:
- EP-A1- 3 444 142
- CN-A- 108 275 189
- US-A1- 2014 345 956

## Description

### BACKGROUND OF THE INVENTION

### 1. Field of the invention

The present invention relates to a stroller and an operation method thereof, and more particularly to a stroller and an operation method thereof enabling a user to push the stroller with less force due to a structure in which wheels are rotated by a motor.

### 2. Description of the Related Art

In general, a stroller is a wheeled vehicle designed to transport a baby. A stroller includes a seat in which a baby is accommodated, wheels provided under the seat, and a handle provided at the rear side of the seat.

Such a stroller needs to ensure the safety of a baby and to give convenience to a user such as a parent.

A user, such as a parent, needs to push a stroller in order to move the same. Because a stroller is equipped with wheels, a user is capable of pushing the same on flat ground with little force. However, there is a problem in that greater force is required to move or control a stroller on an uphill or downhill path.

In addition, there is a problem in that a user needs to use large force to push a cart or a stroller on a bumpy surface.

Therefore, research is increasingly conducted on a stroller enabling a user to move the stroller with little force by rotating the wheels of the stroller using a motor.

For example, Korean Patent Laid-Open Publication No. 10-2018-0078915 (published on July 10, 2018) discloses a stroller that is capable of being driven in an assist driving mode, in which wheels are rotated by a motor.

EP 3 444 142 A1 relates to a calibration method and apparatus for a force detection sensor of an electronic moving vehicle. The calibration method includes collecting a sensing value of a force detection sensor that detects a force applied to an electric moving vehicle during charging of a battery included in the electric moving vehicle; and setting a zero point of the force detection sensor based on the sensing values collected during charging of the battery.

US 2014/345956 A1 relates to a manually propelled vehicle including a vehicle body, a grip for a user to grip when walking, a wheel for moving the vehicle body along with the walking user, a wheel driver that electromotively drives the wheel, a grip sensor that monitors distribution of pressure applied to the grip, and a controller that sets parameters of the wheel driver according to output of the grip sensor.

CN 108 275 189 A relates to a baby carriage system with electric power assistance. The baby carriage system comprises a baby carriage with idler wheels at the bottom, a power assistance system is arranged on the baby carriage, and comprises a force sensor, a control unit and a driving braking device, wherein the force sensor is used for detecting the force, changing a motion state, borne by the baby carriage; the control unit stores a PID algorithm; the driving braking device is used for executing the comparison result of the PID algorithm and the force, and acts on the idler wheels. The baby carriage system with electric power assistance detects the stress of the baby carriage in real time.

When the wheels of a stroller are rotated by a motor, if the rotation of the motor and the wheels is not controlled accurately, an accident is highly likely to occur. In addition, if a sensor related to control of the motor and the wheels is not accurately managed, an accident is highly likely to occur.

Therefore, it is an object of the present invention to provide a stroller and an operation method thereof capable of minimizing an error in a sensor provided at the stroller and effectively managing the sensor.

It is an object of the present invention to provide a stroller and an operation method thereof enabling more accurate control through calibration of a force detection sensor, which is provided at a handle in order to detect the magnitude and direction of the force applied to the handle by a user.

It is an object of the present invention to provide a stroller and an operation method thereof capable of reducing power consumption by controlling the sensing period of a sensor depending on the situation.

It is an object of the present invention to provide a stroller and an operation method thereof enabling a user to move the stroller with less force.

It is an object of the present invention to provide a stroller and an operation method thereof enabling a user to move the stroller with less force on an uphill or downhill path.

### SUMMARY OF THE INVENTION

The invention is specified by the independent claims. Preferred embodiments are defined in the dependent claims.

In order to accomplish the above and other objects, a stroller according to an embodiment of the present invention includes a sensor unit, including a plurality of sensors, and a controller, configured to perform control such that a force detection sensor, which detects force applied to a handle, is calibrated based on data detected by the sensor unit, thereby minimizing an error in the force detection sensor and enabling accurate control.

In order to accomplish the above and other objects, a stroller according to an embodiment of the present invention includes a body having a pair of driving wheels mounted to the left and right sides thereof, a motor configured to rotate the pair of driving wheels, a frame including a lower part connected to the body, the frame extending upwards from the lower part, a handle connected to the frame, a sensor unit including a force detection sensor configured to detect force applied to the handle, a touch sensor configured to detect whether the handle is being grasped, and a wheel sensor configured to detect rotation of the pair of driving wheels, and a controller configured to perform control such that the force detection sensor is calibrated based on data detected by the touch sensor and the wheel sensor, thereby minimizing an error in the force detection sensor and enabling accurate control.

Upon determining that the handle is not being grasped and that the pair of driving wheels does not rotate during a predetermined reference time, the controller may perform control such that the force detection sensor is calibrated.

Upon determining that the handle is not being grasped and that the pair of driving wheels does not rotate during the predetermined reference time, the controller may change the sensing period of the force detection sensor to a long sensing period.

Upon determining that the handle is not being grasped and that the pair of driving wheels rotates during the predetermined reference time, the controller may perform control such that whether the pair of driving wheels is rotating is repeatedly checked a predetermined number of times.

Upon determining that the handle is being grasped, the controller may check the sensing period of the force detection sensor.

Upon determining that the handle is being grasped, the controller may change the sensing period of the force detection sensor to a short sensing period.

The stroller may further include a storage unit, and, upon determining that the handle is being grasped or upon determining that the handle is not being grasped and that the pair of driving wheels is rotating, the controller may perform control such that information about variation in data detected by the force detection sensor is stored in the storage unit.

The controller may control the motor based on data detected by the force detection sensor.

The frame may be located in the middle between the pair of driving wheels in a leftward-rightward direction. The handle may include a left bar and a right bar, which are spaced apart from each other in the leftward-rightward direction at a position corresponding to the frame. The force detection sensor may be connected to the left bar and the right bar and may be coupled to the frame.

The pair of driving wheels may include a first driving wheel mounted to the left side of the body and a second driving wheel mounted to the right side of the body. The motor may include a first motor configured to rotate the first driving wheel and a second motor configured to rotate the second driving wheel. The controller may drive the first motor and the second motor based on the magnitudes of force and torsion detected by the force detection sensor.

The force detection sensor may include a first sensor unit, which is connected to the left bar, a second sensor unit, which is connected to the right bar, and a bracket, which connects the first sensor unit and the second sensor unit and is coupled to the frame.

In order to accomplish the above and other objects, an operation method of a stroller according to an embodiment of the present invention includes detecting whether a handle is being grasped, detecting whether a pair of driving wheels is rotating when the handle is not being grasped, and calibrating a force detection sensor configured to detect force applied to the handle when the pair of driving wheels does not rotate during a predetermined reference time, thereby minimizing an error in the force detection sensor and enabling accurate control.

The operation method may further include changing the sensing period of the force detection sensor to a long sensing period when the handle is not being grasped and when the pair of driving wheels does not rotate during the predetermined reference time.

The operation method may further include performing control such that whether the pair of driving wheels is rotating is repeatedly checked a predetermined number of times when the handle is not being grasped and when the pair of driving wheels rotates during the predetermined reference time.

The operation method may further include checking the sensing period of the force detection sensor when the handle is being grasped, and may further include changing the sensing period of the force detection sensor to a short sensing period depending on the situation.

The operation method may further include storing information about variation in data detected by the force detection sensor in a storage unit when the handle is being grasped or when the handle is not being grasped and the pair of driving wheels is rotating.

The operation method may further include controlling, by a controller, a motor configured to rotate the pair of driving wheels based on data detected by the force detection sensor.

The controller may drive at least one of a pair of motors configured to rotate the pair of driving wheels based on the magnitudes of force and torsion detected by the force detection sensor.

The handle may include a left bar and a right bar, which are spaced apart from each other in a leftward-rightward direction at a position corresponding to a frame to which the handle is connected, and the force detection sensor may be connected to the left bar and the right bar and may be coupled to the frame.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view of a stroller according to an embodiment of the present invention;
FIG. 2 is a perspective view showing a body, driving wheels, a motor, and a caster of the stroller shown in FIG. 1;
FIG. 3 is a perspective view showing a frame and a force detection sensor;
FIG. 4 is a perspective view showing the engagement of a force detection sensor, a bridge, and a handle;
FIG. 5 shows a force detection sensor, wherein FIG. 5(a) is a front view of the force detection sensor, and FIG. 5(b) is a perspective view showing the front of the force detection sensor;
FIG. 6 is a block diagram showing the control relationship between main components of a stroller according to an embodiment of the present invention;
FIG. 7 is a schematic internal block diagram of a controller according to an embodiment of the present invention;
FIG. 8 is an exemplary internal circuit diagram of the motor-driving unit shown in FIG. 7;
FIG. 9 is a flowchart showing an operation method of a stroller according to an embodiment of the present invention;
FIG. 10 is a flowchart showing an operation method of a stroller according to an embodiment of the present invention; and
FIG. 11 is a flowchart showing an operation method of a stroller according to an embodiment of the present invention.

### DETAILED DESCRIPTION OF THE PREFERRED EMBODIMENTS

Hereinafter, exemplary embodiments of the present invention will be described in detail with reference to the accompanying drawings. However, the present invention may be embodied in many different forms, and should not be construed as being limited to the embodiments set forth herein.

In the drawings, an illustration of parts unrelated to the description is omitted in order to clearly and briefly describe the present invention, and the same or extremely similar components are denoted by the same reference numerals throughout the specification.

As used herein, the terms "module" and "unit", with which the names of some components are suffixed, are assigned to facilitate preparation of this specification, and are not intended to suggest unique meanings or functions. Accordingly, the terms "module" and "unit" may be used interchangeably.

In the following description, the terms "first" and "second" are used to describe various constituent elements, but the constituent elements are not limited to the terms. These terms are used only to distinguish one constituent element from another.

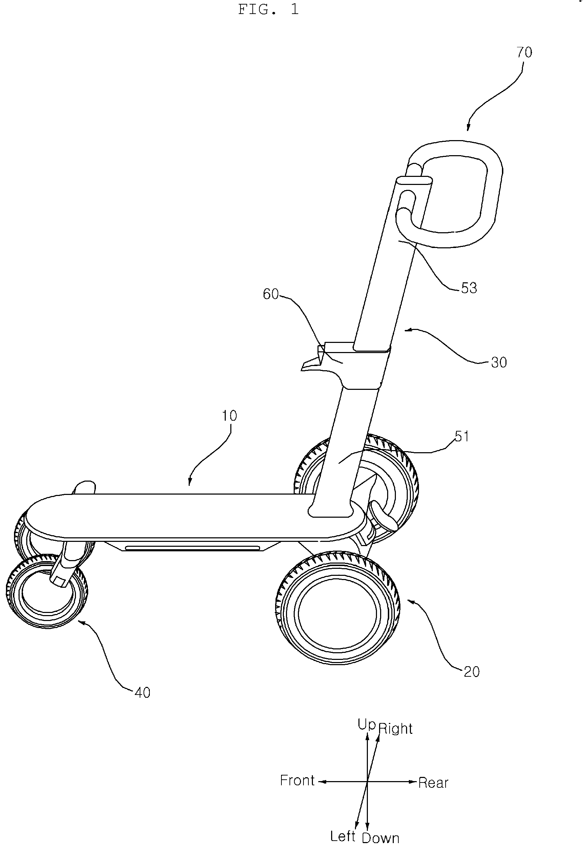

FIG. 1 is a perspective view of a stroller according to an embodiment of the present invention.

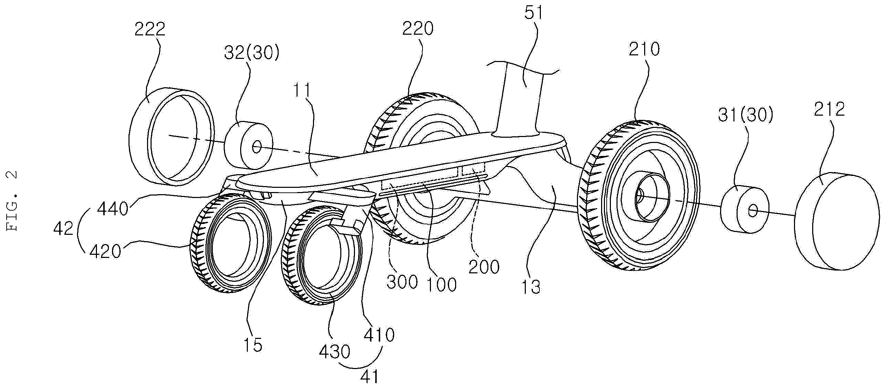

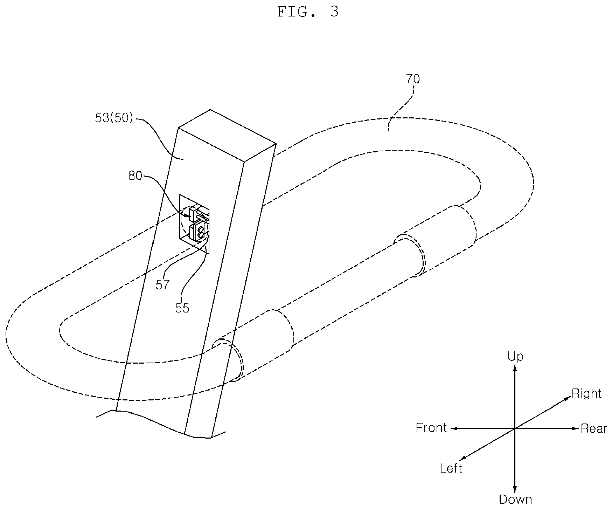

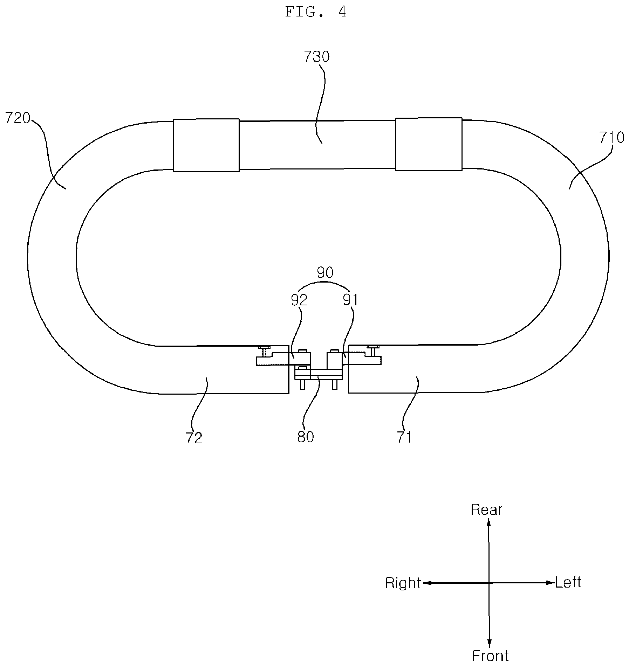

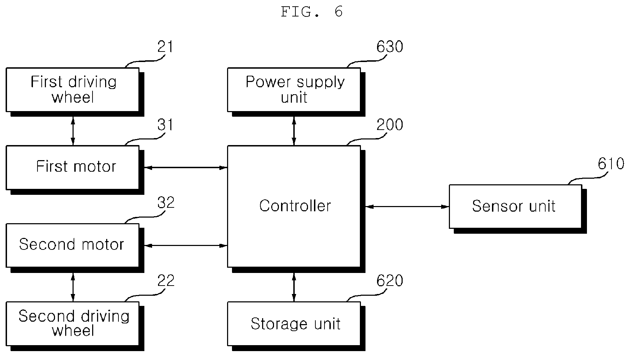

Referring to FIG. 1, a stroller according to an embodiment of the present invention includes a body 10, a pair of driving wheels 20 mounted to the left and right sides of the body 10, a motor 30 (refer to FIG. 2) configured to rotate the pair of driving wheels 20, a frame 50 connected to the body 10 and extending upwards, a handle 70 connected to the frame 50, and a force detection sensor 80 (refer to FIG. 3) configured to detect the force applied to the handle 70 and torsion of the handle 70 with respect to the frame 50. In addition, the stroller may further include a caster 40 configured to movably support the body 10, a cradle (not shown) configured to accommodate a baby, a mount 60 configured to couple the cradle to the frame 50 or the body 10, a bridge 90 (refer to FIG. 4) configured to couple the force detection sensor 80 to the handle 70, a controller 200 (refer to FIGs. 2 and 6) configured to control the operation of the motor 30 based on the value detected by the force detection sensor 80, a battery 300 (refer to FIG. 2) configured to supply power to the controller 200, the force detection sensor 80, and the motor 30, and a casing 100 (refer to FIG. 2) disposed under the body 10 and having a space formed therein to accommodate the controller 200, the motor 30, and the battery 300.

Although an embodiment of the present invention relates to a stroller, the stroller is similar to a cart for transporting goods, except that it includes the body 10, the wheels 20 and 40, the frame 50, and the handle 70. Hereinafter, the stroller will be described by way of example for convenience of description. However, the characteristics of the present invention may also apply to carts other than a stroller.

Due to the pair of driving wheels 21 and 22 mounted to the left and right sides of the body 10, the stroller is capable of being moved by the force of pushing or pulling the same by a user or the rotational force of the motor 30, which is transmitted to the driving wheels 20. Further, the caster 40 may be mounted to the body 10 so as to be spaced apart from the pair of driving wheels 21 and 22 in a forward-backward direction. The caster 40 may movably support the body 10.

As shown in the drawings, the pair of driving wheels 20 may be respectively disposed on the left and right sides of the body 10. As shown in FIG. 1, the pair of driving wheels 21 and 22 may be spaced apart from each other in a leftward-rightward direction, and the spacing distance therebetween may be greater than the width of the body 10 in the leftward-rightward direction.

Alternatively, unlike what is shown in FIG. 1, the width of the body 10 in the leftward-rightward direction may be greater than the spacing distance between the pair of driving wheels 21 and 22, and the pair of driving wheels 21 and 22 may be located under the body 10. In particular, in the case of a cart for transporting goods, it may be advantageous for the width of the body 10 to be greater than the spacing distance between the pair of driving wheels 21 and 22 in order to load a larger amount of goods. Hereinafter, the structure in which the spacing distance between the pair of driving wheels 21 and 22 is greater than the width of the body 10 in the leftward-rightward direction will be described by way of example, but the embodiment is not limited thereto.

The body 10 may be formed so as to be elongated in the forward-backward direction, rather than the leftward-rightward direction. The pair of driving wheels 21 and 22 may be mounted to the left-rear side and the right-rear side of the body 10, respectively, and the caster 40 may be mounted to the front side of the body 10. Due to this structure, the stroller is capable of being moved easily in the forward-backward direction.

The body 10, the caster 40, and the pair of driving wheels 21 and 22 will be described later in greater detail with reference to FIG. 2.

The frame 50 is connected to the body 10 and extends upwards. Here, upward extension of a component includes a configuration in which the component extends substantially vertically upwards and a configuration in which the component extends upwards while being inclined forwards or backwards. Preferably, the frame 50 may extend upwards while being inclined backwards in order to allow the force of pushing the handle 70 by a user to be easily transmitted to the body 10 via the frame 50.

The frame 50 may include a lower part 51 connected to the body 10. The frame 50 may include an upper part 53 connected to the handle 70. The frame 50 may extend upwards from the lower part 51, and may be inclined backwards from the lower part 51 to the upper part 53.

The frame 50 may be located in the middle between the pair of driving wheels 21 and 22 in the leftward-rightward direction. The body 10 may also be located in the middle between the pair of driving wheels 21 and 22 in the leftward-rightward direction. The frame 50 may be located in the middle of the body 10 in the leftward-rightward direction.

As shown in FIG. 1, the frame 50 may extend straight from the lower part 51 to the upper part 53, and may be located in the middle of the body 10 in the leftward-rightward direction. Alternatively, the frame 50 may include two lower parts, which are connected to the left and right sides of the body 10 and extend upwards such that the upper ends thereof meet, and an upper part, which extends upwards from the point at which the upper ends of the two lower parts meet. That is, the frame 50 may have an inverted "Y" shape.

The lower part 51 of the frame 50 may be connected to the rear side of the body 10. The lower part 51 of the frame 50 may be connected to the rear side of the upper surface of the body 10.

The frame 50 may be integrally formed with the body 10, or may be formed separately from the body 10, and the lower part 51 thereof may be engaged with the body 10. The body 10 may include a base 11 (refer to FIG. 2) forming the upper surface of the body 10. The frame 50 may be integrally formed with the base 11, or may be formed separately from the base 11 and may be engaged with the base 11.

In the frame 50, the mount 60 may be mounted between the upper part 53 and the lower part 51. The cradle (not shown), in which a baby is accommodated, may be mounted to the mount 60.

The handle 70 may be connected to the frame 50. The handle 70 may be connected to the upper part 53 of the frame 50. A user may push or pull the handle 70 to move the stroller.

FIG. 2 is a perspective view of a driving unit located at the lower side of the stroller. The body 10, the driving wheels 20, the motor 30, and the caster 40 constitute the driving unit.

Referring to FIG. 2, the body 10 may include a base 11 forming the upper surface of the body 10, a caster support part 15 coupled to the front side of the base 11 in order to support the caster 40, and a driving wheel support part 13 coupled to the rear side of the base 11 in order to support the driving wheels 20. The driving wheels 20 may be mounted to the rear side of the body 10, and the caster 40 may be mounted to the front side of the body 10.

The driving wheels 20 may include wheel bodies 210 and 220 configured to be rotated by rotational force transmitted thereto from the motor 30 or by movement of the body 10, and covers 212 and 222 configured to cover the side surfaces of the wheel bodies 210 and 220. The motor 30 may be disposed in the space formed between each of the wheel bodies 210 and 220 and a corresponding one of the covers 212 and 222.

The driving wheels 20 may include a first driving wheel 21, mounted to the left side of the body 10, and a second driving wheel 22, mounted to the right side of the body 10. The motor 30 may include a first motor 31, configured to rotate the first driving wheel 21, and a second motor 32, configured to rotate the second driving wheel 22.

The first driving wheel 21 may include a wheel body 210 and a cover 212, and the second driving wheel 22 may include a wheel body 220 and a cover 222. The first motor 31 for rotating the first driving wheel 21 may be disposed in the space formed between the cover 212 and the wheel body 210 of the first driving wheel 21, and the second motor 32 for rotating the second driving wheel 22 may be disposed in the space formed between the cover 222 and the wheel body 220 of the second driving wheel 22.

The driving wheels 20 may be rotatably supported by the driving wheel support part 13. The driving wheels 20 may rotate with the rotation center shafts C thereof fixed to the body 10 or the driving wheel support part 13.

The motor 30 may be disposed on the driving wheel support part 13 to rotate the driving wheels 20. Alternatively, the motor 30 may be disposed in each of the driving wheels 20 to rotate the same. The motor 30 shown in FIG. 2 is an in-wheel motor disposed in each of the driving wheels 20. The motor 30 may include a rotor (not shown) configured to transmit rotational force to the driving wheels 20 and a stator (not shown) fixed to the driving wheel support part 13.

The driving wheel support part 13 may protrude to the left and right from the rear side of the base 11. The portion of the driving wheel support part 13 that protrudes to the left may rotatably support the first driving wheel 21, and the portion of the driving wheel support part 13 that protrudes to the right may rotatably support the second driving wheel 22.

The driving wheel support part 13 may be disposed under the base 11. The driving wheel support part 13 may be coupled to the lower side of the base 11.

The caster 40 may be provided in a pair, and the pair of casters may be disposed on the left and right sides of the body 10, respectively. Specifically, the caster 40 may include a first caster 41, which is disposed on the left side of the body 10, and a second caster 42, which is disposed on the right side of the body 10.

The caster 40 may be rotatably supported by the caster support part 15. The caster 40 may include caster wheels 410 and 420, which rotate about a horizontal rotation center shaft, and caster shafts 430 and 440, which connect the caster wheels 410 and 420 and the caster support part 15.

The caster shafts 430 and 440 may protrude downwards from the caster support part 15, and may be rotatably supported by the caster support part 15. The caster shafts 430 and 440 may support the caster wheels 41 and 42 so that the caster wheels 41 and 42 are capable of rotating about the horizontal rotation center shaft. That is, unlike the driving wheels 20, the caster 40 may rotate about the horizontal rotation center shaft, and the horizontal rotation center shaft may rotate with respect to the body 10 or the caster support part 15, rather than being fixed. Therefore, a user is capable of easily change the direction in which the stroller is driven.

Unlike the driving wheels 20, the caster wheels 410 and 420 may not be connected to the motor 30. The caster wheels 410 and 420 may be manually rotated by rotation of the driving wheels 20 by the motor 30 or by movement of the body 10 by a user.

Alternatively, unlike what is shown in the drawings, the caster 40 may be one in number, and may be located in the middle of the body 10.

The body 10 may further include a casing 100 disposed under the base 11. The casing 100 may protrude downwards from the body 10 such that a space is formed between the body 10 and the casing 100. The controller 200 and the battery 300 may be disposed in the space. In addition, other electronic parts, such as a gyro force detection sensor (not shown), may be disposed in the space. In some embodiments, at least some of the internal parts, such as the controller 200 and the battery 300, may be disposed in the internal spaces in the handle 70 and the frame 50.

FIG. 3 is a perspective view of the frame, the force detection sensor, and the handle. The contour of the handle 70 is illustrated by dotted lines in order to show the force detection sensor 80.

FIG. 4 is a perspective view showing the engagement of the force detection sensor 80, the bridge 90, and the handle 70.

Referring to FIG. 3, the frame 50 may have a force detection sensor hole 55 formed in the upper portion thereof. The force detection sensor hole 55 may penetrate the frame 50 in the leftward-rightward direction, and may have a front surface, a rear surface 57, an upper surface, and a lower surface inside the frame 50.

The force detection sensor 80 may be disposed in the force detection sensor hole 55. The force detection sensor 80 may be engaged with the front surface of the force detection sensor hole 55. The force detection sensor 80 may be engaged with the front side of the force detection sensor hole 55.

The handle 70 may include a left bar 71 and a right bar 72, which are spaced apart from each other in the leftward-rightward direction. The force detection sensor 80 and the frame 50 may be disposed in the gap between the left bar 71 and the right bar 72. The force detection sensor hole 55 formed in the frame 50 may be located in the gap between the left bar 71 and the right bar 72.

Referring to FIG. 4, the handle 70 may include a left bar 71 and a right bar 72. The left bar 71 and the right bar 72 may be spaced apart from each other in the leftward-rightward direction. That is, the left bar 71 and the right bar 72 may be spaced apart from each other in a direction parallel to the rotation center shaft C of the pair of driving wheels 21 and 22. The left bar 71 and the right bar 72 may be spaced apart from each other, with the frame 50 interposed therebetween.

The handle 70 may further include a first grip 710, extending backwards from the left bar 71, and a second grip 720, extending backwards from the right bar 72. Each of the first grip 710 and the second grip 720 may be curved in a semicircular shape. The first grip 710 may have a left semicircular shape, and the second grip 720 may have a right semicircular shape.

The handle 70 may further include a third grip 730 connecting the first grip 710 and the second grip 720. The third grip 730 may have a straight line shape. The third grip 730 may be parallel to the left bar 71 and the right bar 72.

A user may grasp the left and right portions of the third grip 730 with the left and right hands to move the stroller. Alternatively, a user may grasp the first grip 710 with the left hand, and may grasp the second grip 720 with the right hand. This structure of the handle 70 enables a user to conveniently move the stroller according to the user's tendency and the situation.

The stroller according to the embodiment of the present invention may include a bridge 90 connecting the force detection sensor 80 to the handle. The bridge 90 may include a first bridge 91, engaged with the force detection sensor 80 and the left bar 71, and a second bridge 92, engaged with the force detection sensor 80 and the right bar 72.

The width of the force detection sensor 80 in the leftward-rightward direction may be less than the spacing distance between the left bar 71 and the right bar 72. Further, the force detection sensor 80 may be engaged with the bridge 90, and the bridge 90 may be engaged with the handle 70. Accordingly, it is possible to easily engage the frame 50, the force detection sensor 80, the bridge 90, and the handle 70.

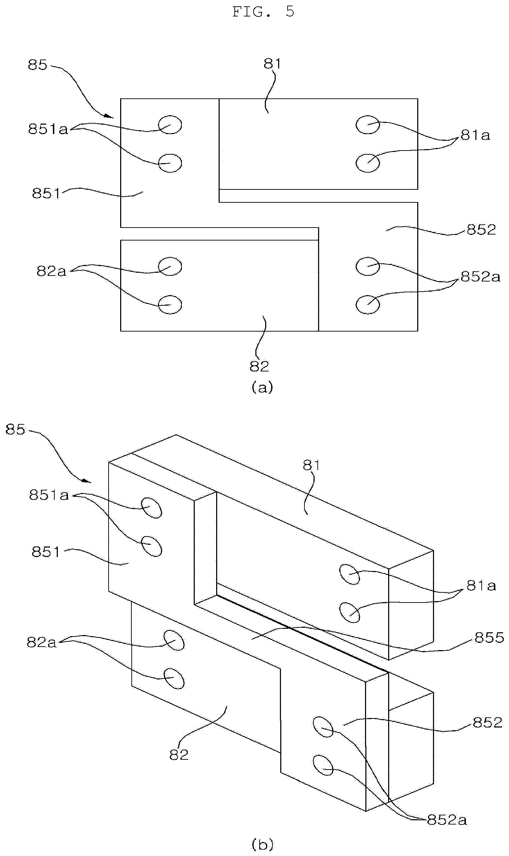

FIG. 5 shows the force detection sensor. FIG. 5(a) is a front view of the force detection sensor, and FIG. 5(b) is a perspective view showing the front of the force detection sensor.

Referring to FIG. 5(a), the force detection sensor 80 may include a first sensor unit 81 for detecting torsion of the left bar 71 with respect to the frame 50 and a second sensor unit 82 for detecting torsion of the right bar 72 with respect to the frame 50. The force detection sensor 80 may include a load cell. The load cell may measure force or load using a strain gauge that measures the strain of a structure. Each of the first sensor unit 81 and the second sensor unit 82 may include a load cell.

The magnitude and direction of the force applied to the handle 70 and torsion of the handle 70 with respect to the frame 50 may be measured by the load cell. The magnitude and direction of force applied to the handle 70 may determine torsion of the handle 70 with respect to the frame 50. Thus, torsion of the handle 70 with respect to the frame 50 may be expressed using both the magnitude and the direction of force.

The force detection sensor 80 may further include a bracket 85 coupled to the frame 50. The force detection sensor 80 may be firmly coupled to the frame 50 via the bracket 85, which is coupled to the frame 50.

The bracket 85 may connect the first sensor unit 81 and the second sensor unit 82. The bracket 85 may include a first coupling portion 851, to which the first sensor unit 81 is coupled, and a second coupling portion 852, to which the second sensor unit 82 is coupled. The first coupling portion 851 may be located on the right side of the second coupling portion 852, and the second coupling portion 852 may be located on the left side of the first coupling portion 851. Preferably, the first coupling portion 851 may be located on the right side with respect to the center of the bracket 85, and the second coupling portion 852 may be located on the left side with respect to the center of the bracket 85.

The first sensor unit 81 may be coupled to the first coupling portion 851, which is located on the right side, and the second sensor unit 82 may be coupled to the second coupling portion 852, which is located on the left side. The first sensor unit 81 and the second sensor unit 82 may be connected to the left bar 71 and the right bar 72, respectively, via the bridge 90, thereby minimizing the size of the space in which the force detection sensor 80 is disposed. Therefore, the force detection sensor 80 is capable of being efficiently disposed in the small space between the left bar 71 and the right bar 72 within the width of the frame 50 in the leftward-rightward direction. In this way, the force detection sensor 80 is capable of being disposed in one small space and of detecting torsion of the left bar 71 with respect to the frame 50 and torsion of the right bar 72 with respect to the frame 50.

The bracket 85 may further include a connection portion 855 connecting the first coupling portion 851 and the second coupling portion 852. The first coupling portion 851, the second coupling portion 852, and the connection portion 855 may be integrally formed.

One of the first coupling portion 851 and the second coupling portion 852 may extend upwards from the connection portion 855, and the other one of the first coupling portion 851 and the second coupling portion 852 may extend downwards from the connection portion 855.

The first coupling portion 851 may extend from the right end of the connection portion 855 in one of the upward direction and the downward direction, and the second coupling portion 852 may extend from the left end of the connection portion 855 in the other one of the upward direction and the downward direction. For example, as shown in FIG. 5, the first coupling portion 851 may extend upwards from the connection portion 855 and the second coupling portion 852 may extend downwards from the connection portion 855. Conversely, the first coupling portion 851 may extend downwards from the connection portion 855 and the second coupling portion 852 may extend upwards from the connection portion 855.

The forward, backward, leftward, rightward, upward and downward directions are defined as indicated by the arrows in FIG. 1. FIG. 5 shows the force detection sensor 80 when viewed from the front to the rear. Thus, the leftward and rightward directions shown in FIG. 5 are opposite those shown in FIG. 1. Describing the shape of the bracket 85 by way of example, the first coupling portion 851 is illustrated as extending upwards from the right side of the connection portion 855.

One of the first sensor unit 81 and the second sensor unit 82 may be disposed above the other. In the case in which the first coupling portion 851 extends upwards from the connection portion 855 and the second coupling portion 852 extends downwards from the connection portion 855, the first sensor unit 81 may be disposed above the second sensor unit 82. Further, the first sensor unit 81 may be located above the connection portion 855, and the second sensor unit 82 may be located below the connection portion 855. Conversely, the first coupling portion 851 may extend downwards from the connection portion 855, and the first sensor unit 81 may be located below the second sensor unit 82. Hereinafter, the case in which the first sensor unit 81 is located at the upper side will be described by way of example for convenience of description.

The first sensor unit 81 may extend from the first coupling portion 851 toward the left bar 71, and the second sensor unit 82 may extend from the second coupling portion 852 toward the right bar 72. The first sensor unit 81 may be spaced apart from the connection portion 855 in the upward direction, and the second sensor unit 82 may be spaced apart from the connection portion 855 in the downward direction.

The first sensor unit 81 and the second sensor unit 82 may be disposed parallel to each other.

As shown in the drawings, the connection portion 855 may be disposed parallel to the first sensor unit 81 and the second sensor unit 82. Thus, the force detection sensor 80 may have a " 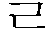 " shape or a reverse " 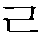 " shape.

Alternatively, unlike what is shown in the drawings, the first sensor unit 81 and the second sensor unit 82 may be disposed parallel to each other, and the connection portion 855 may extend from the first coupling portion 851 to the second coupling portion 852 so as not to be parallel to the first and second sensor units 81 and 82. That is, the bracket 85 may be formed in a straight line shape such that one end portion thereof serves as the first coupling portion 851 and the opposite end portion thereof serves as the second coupling portion 852, the first sensor unit 81 may be coupled to the right upper end of the first coupling portion 851, and the second sensor unit 82 may be coupled to the left lower end of the second coupling portion 852. Thus, the force detection sensor 80 may have a "Z" shape or a reverse "Z" shape.

The first sensor unit 81 and the second sensor unit 82 may have the same shape, and may be arranged in a point-symmetrical manner with respect to the center of the bracket 85. The bracket 85 may have a point-symmetrical shape about the center thereof.

The force detection sensor 80 is coupled to the frame 50, and the first sensor unit 81 and the second sensor unit 82 are spaced apart from the frame 50. At least the distal ends of the first sensor unit 81 and the second sensor unit 82, which are oriented toward the handle 70, are spaced apart from the frame 50. Due to this structure, the force detection sensor 80 is capable of detecting torsion of the handle 70 with respect to the frame 50.

Referring to FIG. 5(b), the bracket 85 may protrude further forwards than the first sensor unit 81 and the second sensor unit 82. The first sensor unit 81 and the second sensor unit 82 may be coupled to the rear surface of the bracket 85 so as to be in contact therewith, and the front surface of the bracket 85 may be coupled to the frame 50. The first sensor unit 81 and the second sensor unit 82 may be spaced apart from the frame 50 by the thickness of the bracket 85.

Alternatively, unlike what is shown in the drawings, only the parts of the bracket 85 that are coupled to the frame, i.e. only the first coupling portion 851 and the second coupling portion 852, may protrude further forwards than the first sensor unit 81 and the second sensor unit 82.

Alternatively, unlike the above configurations, the bracket 85 may not protrude further forwards than the first sensor unit 81 or the second sensor unit 82, and a spacer (not shown) may be disposed between the bracket 85 and the frame 50, so the force detection sensor 80 and the frame 50 may be spaced apart from each other.

Referring to FIG. 5, the force detection sensor 80 may have a plurality of fastening holes 81a, 82a, 851a and 852a formed therein. The bracket 85 may be fixedly coupled to the frame 50 in a manner such that fastening members (not shown) penetrate the fastening holes 851a and 852a formed in the bracket 85 and are then inserted into the frame 50.

The frame 50 may have a force detection sensor hole 55 formed in the upper portion thereof, and the bracket 85 may be engaged with the front surface of the force detection sensor hole 55.

The above-mentioned fastening holes 851a and 852a may be formed in the first coupling portion 851 and the second coupling portion 852 so as to engage the first and second sensor units 81 and 82, the bracket 85, and the frame 50 together.

The force detection sensor 80 may have fastening holes 81a and 82a formed therein so as to be engaged with the bridge 90. The fastening hole 81a may be formed in the left portion of the first sensor unit 81, and the fastening hole 82a may be formed in the right portion of the second sensor unit 82.

The stress distribution of the force detection sensor 80 varies depending on the case in which force is not applied to the handle 70, the case in which force is applied to both sides of the handle 70, and the case in which force is applied to either side of the handle 70. Accordingly, it is possible to detect torsion of the handle 70 with respect to the frame 50 and the magnitude and direction of force applied to the handle 70 using an electrical signal, such as the variable resistance value from the strain gauge.

When a user does not apply force to the handle 70, the handle 70 and the force detection sensor 80 are not twisted, and stress is evenly distributed.

In order to move the stroller straight forwards, the user may apply force to the left portion and the right portion of the third grip 730 in the forward direction. Because the handle 70 is connected to the frame 50, the first grip 710 and the second grip 720 are deformed such that the radii of curvature thereof decrease, and stress is concentrated due to the deformation. Further, the portions of the left bar 71 and the right bar 72 that are connected to the first grip 710 and the second grip 720 are inclined forwards. That is, the handle 70 is twisted with respect to the frame 50. More specifically, the left bar 71 and the right bar 72 are twisted forwards with respect to the frame 50.

The left bar 71 and the right bar 72 are twisted forwards with respect to the frame 50, the portions of the first sensor unit 81 and the second sensor unit 82 that are engaged with the first bridge 91 and the second bridge 92 are twisted so as to be oriented forwards, and stress is concentrated on the middle portions of the first sensor unit 81 and the second sensor unit 82 in the leftward-rightward direction and on the rear portions thereof.

In order to move the stroller backwards, the user may apply force to the left portion and the right portion of the third grip 730 in the backward direction. In this case, stress is concentrated on the middle portions of the first sensor unit 81 and the second sensor unit 82 in the leftward-rightward direction and on the front portions thereof. Thus, when force is applied to both sides of the handle 70, the force detection sensor 80 is capable of determining whether force is applied to the handle 70 in the forward direction or the backward direction.

In order to turn the stroller to the left or the right or to drive the stroller on a bumpy surface, the user may apply force to the left portion or the right portion of the handle 70. In this case, one of the left bar 71 and the right bar 72 is twisted forwards with respect to the frame 50, and the other one thereof is twisted backwards with respect to the frame 50. For example, when the user applies force to the right portion of the handle 70 in the forward direction in order to turn the stroller to the right, the right bar 72 may be twisted forwards with respect to the frame 50, and the left bar 71 may be twisted backwards with respect to the frame 50, or may be twisted forwards to a smaller angle than the right bar 72.

When the user applies force to the right portion of the handle 70 in the forward direction, the stress of the second sensor unit 82 is concentrated on the portion thereof that is adjacent to the bridge 90, unlike the first sensor unit 81.

FIG. 6 is a block diagram showing the control relationship between main components of a stroller according to an embodiment of the present invention.

Referring to FIG. 6, a stroller according to an embodiment of the present invention may include a first driving wheel 21 located on the left side, a second driving wheel 22 located on the right side, a first motor 31 configured to rotate the first driving wheel 21, a second motor 32 configured to rotate the second driving wheel 22, and a controller 200 configured to control the overall operation of the stroller. The controller 200 may control the first and second motors 31 and 32 to rotate the first and second driving wheels 21 and 22 in a desired direction and at a desired speed.

In addition, the stroller according to the embodiment of the present invention includes a sensor unit 610, which includes sensors for detecting various data related to the operation and state of the stroller.

The sensor unit 610 includes a force detection sensor 80, which detects the force and torsion applied to the handle 70, and may further include a dynamic tilt sensor (not shown), which detects the tilt of the stroller.

As described above with reference to FIGs. 1 to 5, the force detection sensor 80 detects the force and torsion applied to the handle 70. The controller 200 may determine a user's manipulation intention based on data detected by the force detection sensor 80, and may control the first and second motors 31 and 32 according to the determined manipulation intention.

In the stroller according to the embodiment of the present invention, at least one of the driving wheels 20 is rotated by the motor 30, so it is possible to reduce the force with which a user pushes the stroller. To this end, the force applied to the handle 70 of the stroller may be measured by the force detection sensor 80, and the torque of the motor 30 may be increased so that the force is reduced by a certain amount.

The embodiment of the present invention is capable of accurately measuring the force and torsion applied to the handle 70 of the stroller using one force detection sensor 80 and of accurately driving the motor 30 based on the measured force and torsion.

In some embodiments, the controller 200 may determine whether the handle 70 is being grasped by the user using the force detection sensor 80. The sensor unit 610 further includes a touch sensor for detecting whether the handle 70 is being grasped by the user.

The dynamic tilt sensor is configured to detect the tilt of the stroller and the state of the ground surface. The dynamic tilt sensor may be implemented as a well-known sensor capable of detecting variation in tilt, such as, for example, a gyro sensor, an acceleration sensor, and a geomagnetic sensor.

The dynamic tilt sensor may be disposed on the body 10, the caster 40, or the driving wheel 20. In some cases, a plurality of dynamic tilt sensors may be provided, and may be disposed at a plurality of positions.

The controller 200 may determine whether the current location is a slope or flat ground based on data detected by the dynamic tilt sensor. In addition, the controller 200 may control the first and second motors 31 and 32 in different ways depending on whether the current location is flat ground or a slope, and may control a braking system.

The controller 200 may control the rotation of the wheels 20 during an automatic braking operation according to information on the tilt (uphill or downhill) obtained based on data detected by the dynamic tilt sensor.

The embodiment of the present invention is capable of determining the state of a corresponding ground surface by patterning data that was measured by the dynamic tilt sensor in the upward, downward, leftward and rightward directions. Upon recognizing a large amount of shake in the upward-downward direction while monitoring data detected by the dynamic tilt sensor, the controller 200 may determine that the ground surface is bumpy, and may control the rotation of the wheels 20 accordingly.

The sensor unit 610 includes a wheel sensor (not shown), which detects rotation of the driving wheels 20 and/or the motor 30. The wheel sensor is connected to the driving wheels 20 to detect the number of rotations of the wheels. Here, the wheel sensor may be a rotary encoder. Alternatively, the wheel sensor may include an encoder, which is connected to the motor 30 and detects the position of the rotor of the motor 30, a hall sensor, and a resolver.

The controller 200 may control the first and second motors 31 and 32 based on data detected by the wheel sensor to rotate the first and second driving wheels 21 and 22 in a desired direction and at a desired speed.

In addition, the controller 200 may control the force detection sensor 80 and other sensors included in the sensor unit 610 to perform calibration.

In addition, the stroller according to the embodiment of the present invention may include a power supply unit 630, which includes a rechargeable battery 300 to supply power to electronic parts of the stroller. The power supply unit 630 may supply driving power and operation power to each of the components of the stroller, and may be charged by receiving power from a charging station (not shown) when the remaining power is insufficient.

The stroller according to the embodiment of the present invention may include a storage unit 620 for recording a variety of pieces of information necessary for control. The storage unit 620 may include one or more volatile or nonvolatile recording media.

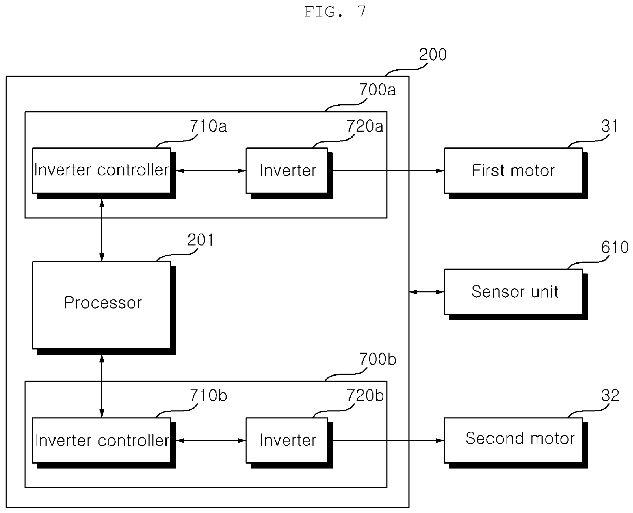

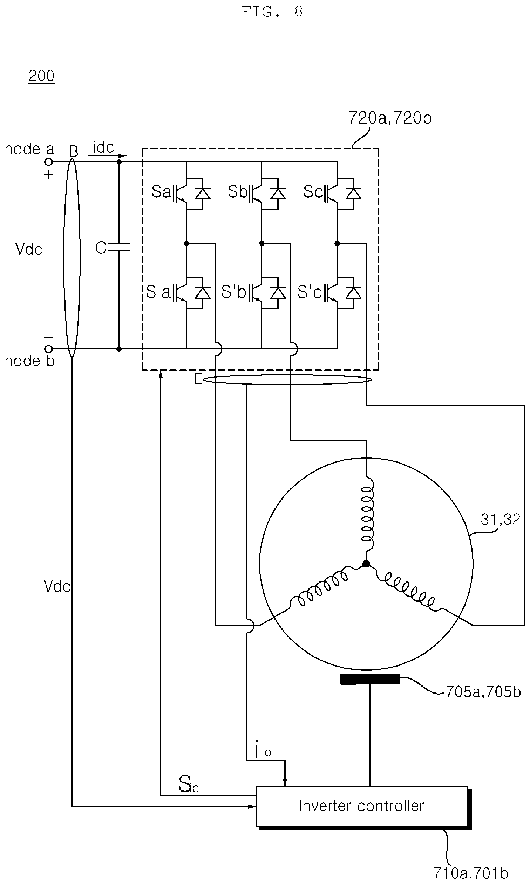

FIG. 7 is a schematic internal block diagram of the controller according to an embodiment of the present invention, and FIG. 8 is an exemplary internal circuit diagram of the motor-driving unit shown in FIG. 7.

Referring to FIGs. 7 and 8, the controller 200 may include motor-driving units 700a and 700b for driving the motors 31 and 32 and a processor 201 for controlling the motor-driving units 700a and 700b and the sensor unit 610.

The motor-driving units 700a and 700b, which are driving units for driving the motors 31 and 32, may be referred to as motor-driving devices. The first motor-driving unit 700a may drive the first motor 31, and the second motor-driving unit 700b may drive the second motor 32.

The motor-driving units 700a and 700b according to an embodiment of the present invention may include inverters 720a and 720b, which have a plurality of switching elements and output alternating-current (AC) power to the motors 31 and 32, output current detectors E, which detect output current io flowing through the motors 31 and 32, and inverter controllers 710a and 710b, which output switching control signals to the inverters 720a and 720b based on a torque command value T* and current information id and iq, acquired based on the output current io detected by the output current detectors E.

Further, the inverter controllers 710a and 710b may receive current command values i*d and i*q from the processor 201 as well as the torque command value T* and the current information id and iq acquired based on the output current io. The inverter controllers 710a and 710b may output switching control signals to the inverters 720a and 720b based on the received current command values.

Referring to the drawings, the motor-driving units 700a and 700b according to the embodiment of the present invention, which are driving devices for driving the motors 31 and 32, may include inverters 720a and 720b, which have a plurality of switching elements Sa to Sc and S'a to S'c and output AC power to the motors 31 and 32, and inverter controllers 710a and 710b, which control the inverters 720a and 720b.

In addition, the motor-driving units 700a and 700b according to the embodiment of the present invention may further include capacitors C, which store DC terminal voltage Vdc corresponding to the input terminals of the inverters 720a and 720b, DC terminal voltage detectors B, which detect the DC terminal voltage Vdc, and output current detectors E, which detect output current flowing through the motors 31 and 32.

The motors 31 and 32 according to the embodiment of the present invention may be three-phase motors, which are driven by the inverters 720a and 720b. Each of the three-phase motors 31 and 32 includes a stator and a rotor, and AC power of each phase, which has a predetermined frequency, is applied to the coil of the stator of each of the phases a, b and c to rotate the rotor. Each of the motors 31 and 32 may be implemented as any one of various types of motors, such as, for example, an induction motor, a brushless DC (BLDC) motor, and a reluctance motor.

The inverter controllers 710a and 710b may output switching control signals Sic to the inverters 720a and 720b based on the current command values i*d and i*q corresponding to the calculated torque.

The inverter controllers 710a and 710b according to an embodiment of the present invention calculate current information id and iq and a torque command value T* in real time, calculate a current command value i*d and i*q based on the torque command value T*, and drive the motors 31 and 32 using the current command values i*d and i*q. Accordingly, high-efficiency driving is achieved more accurately.

In addition, the motor-driving units 700a and 700b may further include capacitors C, which store DC terminal voltage Vdc corresponding to the input terminals of the inverters 720a and 720b, and DC terminal voltage detectors B, which detect the DC terminal voltage Vdc.

The inverter controllers 710a and 710b calculate current command values i*d and i*q based on the current information id and iq, the torque command value T*, and the detected DC terminal voltage Vdc, and drive the motors 31 and 32 using the current command values i*d and i*q. Accordingly, high-efficiency driving is achieved more accurately.

Referring to FIGs. 3 and 4, the motor-driving units 700a and 700b according to the embodiment of the present invention may include inverters 720a and 720b, inverter controllers 710a and 710b, output current detectors E, and DC terminal voltage detectors B.

The DC terminal capacitor C stores input power. Although the DC terminal capacitor C is illustrated in the drawings as being singular in number, it may be plural in number in order to secure stability of the device.

The input power supplied to the DC terminal capacitor C may be power stored in the battery 300 or power, the level of which has been converted by a converter (not shown).

Since DC power is stored therein, the two ends of the DC terminal capacitor C may be referred to as DC terminals or DC link terminals.

The DC terminal voltage detector B may detect the DC terminal voltage Vdc at both ends of the DC terminal capacitor C. To this end, the DC terminal voltage detector B may include a resistance element and an amplifier. The detected DC terminal voltage Vdc may be input to the inverter controllers 710a and 710b as a discrete signal having the form of a pulse.

The inverters 720a and 720b may include a plurality of inverter-switching elements Sa to Sc and S'a to S'c. The inverters 720a and 720b may convert the DC power Vdc into three phases of AC power Va, Vb and Vc having a predetermined frequency through on/off operation of the switching elements Sa to Sc and S'a to S'c, and may output the three phases of AC power to the three-phase synchronous motors 31 and 32.

Each of the inverters 720a and 720b includes upper arm switching elements Sa, Sb and Sc and lower arm switching elements S'a, S'b and S'c. Each upper arm switching element and a corresponding lower arm switching element are connected in series to form a pair, and a total of three pairs of upper and lower arm switching elements Sa&S'a, Sb&S'b and Sc&S'c are connected in parallel. A diode is connected to each of the switching elements Sa, S'a, Sb, S'b, Sc and S'c in an antiparallel manner.

The switching elements of the inverters 720a and 720b perform on/off operation based on inverter-switching control signals Sic from the inverter controllers 710a and 710b. Thus, three-phase AC power having a predetermined frequency is output to the three-phase synchronous motors 31 and 32.

The motor-driving units 700a and 700b according to an embodiment of the present invention may include position detection sensors 705a and 705b.

The inverter controller 430 may receive the detected output current io from the output current detector E, and may receive information about the positions θ of the rotors of the motors 31 and 32 from the position detection sensors 705a and 705b.

The position detection sensors 705a and 705b may detect the positions θ of the magnetic poles of the rotors of the motors 31 and 32. That is, the position detection sensors 705a and 705b may detect the positions of the rotors of the motors 31 and 32. To this end, the position detection sensors 705a and 705b may include wheel sensors, such as an encoder or a resolver.

In some embodiments, the inverter controllers 710a and 710b may control the switching operation of the inverters 720a and 720b in a sensorless manner.

To this end, the inverter controllers 710a and 710b may receive output current io detected by the output current detector E.

The inverter controllers 710a and 710b may output inverter-switching control signals Sic to respective gate terminals of the inverters 720a and 720b in order to control the switching operation of the inverters 720a and 720b. Accordingly, the inverter-switching control signal Sic may be referred to as a gate-driving signal.

The inverter-switching control signal Sic is a pulse width modulation (PWM) switching control signal, and is generated and output based on the output current io detected by the output current detector E.

The output current detector E detects the output current io flowing between the inverters 720a and 720b and the three-phase motors 31 and 32. That is, the output current detector E may detect the current flowing through the motors 31 and 32.

The output current detector E may detect all of the output currents ia, ib and ic of respective phases, or may detect the output currents of two phases using three-phase equilibrium.

The output current detector E may be located between the inverters 720a and 720b and the motors 31 and 32, and a current transformer (CT) or a shunt resistor may be used to detect the current.

The detected output current io, which is a discrete signal having the form of a pulse, may be applied to the inverter controllers 710a and 710b, and a switching control signal Sic may be generated based on the detected output current io.

As described above with reference to FIGs. 1 to 8, the stroller according to an embodiment of the present invention may include a body 10, a pair of driving wheels 20 mounted to the left and right sides of the body 10, a motor 30 configured to rotate the pair of driving wheels 20, a frame 50 connected to the body 10 and extending upwards, a handle 70 connected to the frame 50, a force detection sensor 80 configured to detect the force applied to the handle 70 and torsion of the handle 70 with respect to the frame 50, a sensor unit 610, which includes a touch sensor configured to detect whether the handle 70 is being grasped and a wheel sensor configured to detect the rotation of the pair of driving wheels, and a controller 200 configured to control the overall operation of the stroller.

The controller 200 may control the overall operation of the stroller, such as the operation of the motor 30, based on data detected by the sensor unit 610.

For example, the controller 200 may control the first motor 31 and the second motor 32 based on force and torsion detected by the force detection sensor 80 so as to provide power for moving the stroller forwards or backwards.

In addition, the controller 200 may drive the first motor 31 or the second motor 32, or may control the speed of the first motor 31 and the speed of the second motor 32 to be different from each other based on force and torsion detected by the force detection sensor 80 so as to provide power for turning the stroller to the left or the right.

The stroller according to an embodiment of the present invention may measure force and torsion transmitted from the handle 70 to the main body (including the frame 50 and the body 10) using one force detection sensor 80, which is provided in the middle of the handle 70 and is capable of measuring two types of force, and may adjust the driving torques of the first and second motors 31 and 32 according to the measured force and torsion.

The controller 200 may control the current supplied to the first and second motors 31 and 32 in proportion to the magnitudes of the force and torsion detected by the force detection sensor 80 to control the torques of the first and second motors 31 and 32.

In addition, according to the embodiments of the present invention, the sensor unit 610 detects whether the user's hands are placed on the handle 70. That is, the sensor unit 610 detects whether the user is grasping the handle 70 with the hands. For example, it is possible to detect whether the handle 70 is being grasped by the user using the force detection sensor 80 or the touch sensor.

Upon determining that no hands are grasping the handle 70, the controller 200 may operate the braking system so that the driving wheels 20 are stopped.

The stroller according to the embodiment of the present invention may determine a user's manipulation intention using the force detection sensor 80 provided at the handle 70, and may control the first and second motors 31 and 32 located at the first and second driving wheels 21 and 22 according to the determined manipulation intention. Accordingly, the stroller is moved according to the user's intention. In order to accurately determine the user's manipulation intention, calibration, such as adjustment of the zero point of the force detection sensor 80, is necessary.

Due to the characteristics of the force detection sensor 80, the zero point thereof changes according to structural deformation over time and the use environment. It is necessary to accurately recognize the change in the zero point in order to perform calibration. The reason for this is that when the force detection sensor 80 accurately detects the user's force, the stroller can be accurately controlled according to the user's intention.

Further, because data detected by the force detection sensor 80 is directly related to control of the first and second motors 31 and 32, an error in the zero point may pose a great risk to a baby.

Therefore, the controller 200 performs control such that the force detection sensor 80 is calibrated.

For example, the force detection sensor 80 may be calibrated after the stroller is powered on, during charging, or after charging is completed.

However, this calibration method is not capable of resetting the zero point of the force detection sensor 80 if the zero point becomes inaccurate when the stroller is not in an on state or is not being charged. Therefore, there is a possibility that the stroller is controlled differently from the user's intention due to the inaccurate zero point, resulting in a dangerous situation. Further, there is a possibility of the stroller malfunctioning due to the inaccurate zero point.

According to the embodiments of the present invention, the stability and reliability of the stroller may be improved by performing calibration even when not powered on or charging.

In addition, according to the embodiments of the present invention, the accuracy of the force detection sensor 80 is maximized through real-time calibration, thereby preventing the stroller from being controlled incorrectly due to an error in values detected by the force detection sensor 80.

In addition, according to the embodiments of the present invention, it is possible to reduce current consumption by adjusting the sensing period during calibration.

To this end, the controller 200 may determine whether to calibrate the force detection sensor 80 based on data detected by the sensor unit 610, and may calibrate the force detection sensor 80 in an appropriate situation.

For example, the controller 200 may control calibration of the force detection sensor 80 based on data detected by the touch sensor and the wheel sensor.

Hereinafter, operation methods according to embodiments the present invention, such as calibration of the force detection sensor 80 and adjustment of the sensing period, will be described in detail with reference to the drawings.

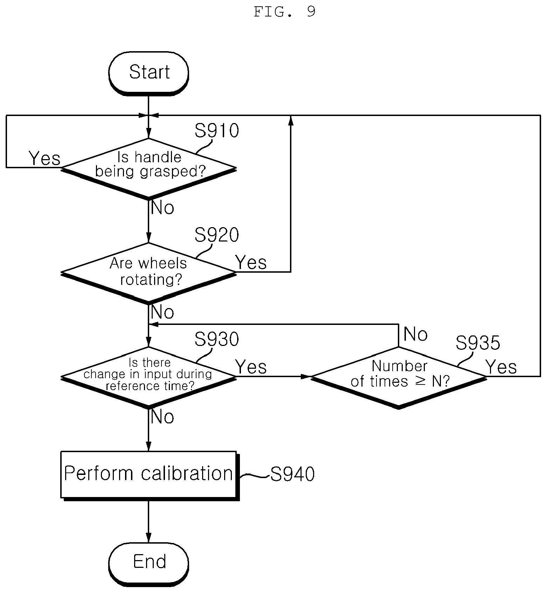

FIG. 9 is a flowchart showing an operation method of the stroller according to an embodiment of the present invention.

Referring to FIG. 9, the stroller according to an embodiment of the present invention may determine whether the handle 70 is being grasped by the user's hands (S910), and may determine whether the first and second driving wheels 21 and 22 are rotating (S920).

The controller 200 may determine whether the user is grasping the handle 70 with the hands based on data detected by the force detection sensor 80 or the touch sensor (S910).

In addition, the controller 200 may determine whether the first and second driving wheels 21 and 22 are rotating based on data detected by the wheel sensor (S920).

According to an embodiment of the present invention, in order to perform calibration, two conditions may be used, one of which is a determination as to whether the handle 70 is being grasped by the user's hands (S910), and the other of which is a determination as to whether the first and second driving wheels 21 and 22 are rotating (S920).

That is, real-time calibration is performed in the state in which the handle structure, which is connected to the force detection sensor 80, is not grasped by the user's hands and the driving wheels are stopped, that is, are not rotating.

In some embodiments, whether the first and second driving wheels 21 and 22 are rotating may be determined first (S920), and then whether the handle 70 is being grasped by the user's hands may be determined (S910). Alternatively, the determination as to whether the handle 70 is being grasped by the user's hands (S910) and the determination as to whether the first and second driving wheels 21 and 22 are rotating (S920) may be performed simultaneously.

According to an embodiment of the present invention, upon determining that the handle 70 is not being grasped by the user's hands (S910), the controller 200 may preferentially drive the braking system to stop rotation of the first and second driving wheels 21 and 22 in order to ensure safety. For example, upon determining that the handle 70 is not being grasped by the user's hands (S910), the controller 200 may stop supplying current to the first and second motors 31 and 32, which rotate the first and second driving wheels 21 and 22, or may rotate the first and second motors 31 and 32 in the reverse direction. In addition, upon determining that the handle 70 is not grasped by the user's hands (S910), the controller 200 may drive the braking device, which is implemented as a hardware component, to stop rotation of the first and second driving wheels 21 and 22 or to keep the first and second driving wheels 21 and 22 stopped.

Therefore, more preferably, whether the handle 70 is being grasped by the user's hands may be determined first (S910). Upon determining that the handle 70 is not being grasped by the user's hands (S910), the controller 200 may determine whether the first and second driving wheels 21 and 22 are rotating based on data detected by the wheel sensor (S920). Accordingly, it is possible to more assuredly prevent the occurrence of an accident by first determining whether the braking system is being driven and subsequently controlling the calibration of the sensors.

In some embodiments, whether there is a change in the input of the sensor unit 610 during a predetermined reference time may be determined (S930). For example, in the case in which the first and second driving wheels 21 and 22 are temporarily stopped and then driven to rotate, it is not possible to complete the calibration. Even if calibration is completed, it may be inaccurate. Further, in the case of using a plurality of detection values according to a calibration method, it is possible to secure necessary detection values during the predetermined reference time. Accordingly, when the first and second driving wheels 21 and 22 are not driven during the predetermined reference time, the force detection sensor 80 may be calibrated (S940).

Upon determining that the handle 70 is not being grasped by the user's hands (S910) and that the pair of driving wheels 20 does not rotate during the predetermined reference time (S920 and S930), the controller 200 may perform control such that the force detection sensor 80 is calibrated (S940).

The controller 200 may adjust the zero point of the force detection sensor 80 based on existing data and the current detection value.

Alternatively, the controller 200 may adjust the zero point of the force detection sensor 80 based on the average of detection values collected during the calibration period or the most frequently collected detection value.

In some embodiments, the controller 200 may effectively process only a detection value falling within a predetermined reference range, and may use the processed detection value for adjustment of the zero point. Here, the reference range may have a range of initially set values, or may have a range of values updated based on data collected during the period of use by the current user. Accordingly, it is possible to adjust the zero point of the force detection sensor 80 using more accurate detection values.

The detection values used for adjustment of the zero point may be detection values collected during the calibration period (S940). Alternatively, the detection values used for adjustment of the zero point may be detection values collected during the reference time (S930) and the calibration period (S940).

More preferably, the detection values used for adjustment of the zero point may be detection values collected during the reference time (S930). In this case, the controller 200 is capable of determining to perform calibration after a period of time sufficient to obtain detection values to be used for calibration has elapsed. Accordingly, there is an advantage in that a separate time period is not required to acquire detection values.

Thereafter, the controller 200 controls the first and second motors 31 and 32 based on data detected by the force detection sensor 80, which has been calibrated, thereby enabling the stroller to be controlled more accurately.

Upon determining that the handle 70 is not being grasped by the user's hands (S910) and that the pair of driving wheels rotates during the predetermined reference time (S920 and S930), the controller 200 may perform control such that whether the pair of driving wheels is rotating is repeatedly checked a predetermined number of times N (S935).

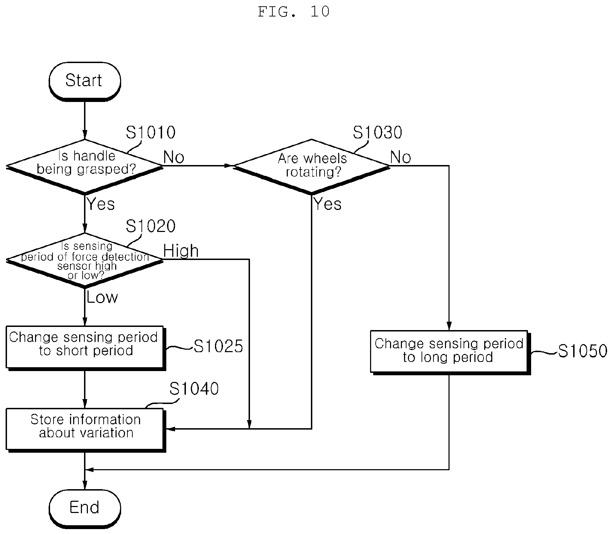

FIG. 10 is a flowchart showing an operation method of the stroller according to an embodiment of the present invention.

Referring to FIG. 10, the stroller according to an embodiment of the present invention may determine whether the handle 70 is being grasped by the user's hands (S1010). For example, the controller 200 may determine whether the user is grasping the handle 70 with the hands based on data detected by the force detection sensor 80 or the touch sensor (S1010).

Upon determining that the handle 70 is being grasped by the user's hands, the controller 200 may check the sensing period of the force detection sensor 80 (S1020). If the sensing period is capable of being set to "high" or "low", the controller 200 may determine whether the current sensing period of the force detection sensor 80 is "high" or "low". In some embodiments, the sensing period may be set to multiple levels, e.g. three or more levels. Here, the "high" sensing period may be a short sensing period, and the "low" sensing period may be a long sensing period.

Upon determining that the handle 70 is being grasped by the user's hands (S1010), the controller 200 may change the sensing period of the force detection sensor 80 to a short sensing period (S1025). That is, the controller 200 may change the sensing period so that the force detection sensor 80 acquires detection values at a shorter period. For example, upon determining that the handle 70 is being grasped by the user's hands (S1010) and that the current sensing period of the force detection sensor 80 is "low", the controller 200 may change the current sensing period to a "high" sensing period (S1025). Changing the sensing period to short may mean increasing the input frequency of the force detection sensor 80.

Upon determining that the handle 70 is being grasped by the user's hands, the controller 200 may perform control such that information about variation in the data detected by the force detection sensor 80 is stored in the storage unit 620. For example, the information about variation in the detected data may include the maximum value and the minimum value, among the values detected by the load cell. That is, it is possible to manage the range of detection values according to the current user while storing information about variation in the detected data. Because the force with which respective persons push or pull the stroller is different, information about the variation may be used to change the setting of the predetermined reference range. Further, when the torque of the motor is controlled in proportion to the values detected by the force detection sensor 80, information about the variation may be used to determine the proportional value.

The controller 200 may determine whether the first and second driving wheels 21 and 22 are being driven based on data detected by the wheel sensor (S1030).

Upon determining that the first and second driving wheels 21 and 22 are being driven (S1030), that is, the first and second driving wheels 21 and 22 are rotating (S1030), the controller 200 may perform control such that information about variation in the data detected by the force detection sensor 80 is stored in the storage unit 620. Accordingly, it is possible to manage the range of detection values according to the current user while storing the information about variation in the detected data.

Meanwhile, upon determining that the handle 70 is not being grasped by the user's hands (S1010) and that the first and second driving wheels 21 and 22 do not rotate during the predetermined reference time (S1030), the controller 200 may change the sensing period of the force detection sensor 80 to a long sensing period (S1050). That is, the controller 200 may change the sensing period so that the force detection sensor 80 acquires detection values at a longer period. For example, upon determining that the handle 70 is not being grasped by the user's hands (S1010), that the first and second driving wheels 21 and 22 do not rotate during the predetermined reference time (S1030), and that the current sensing period of the force detection sensor 80 is "high", the controller 200 may change the current sensing period to a "low" sensing period (S1050). Changing the sensing period longer can mean reducing the input frequency of the force detection sensor 80.

When the first and second driving wheels 21 and 22 do not rotate (S1030), the need for detection by the force detection sensor 80 is reduced.

Therefore, upon determining that the first and second driving wheels 21 and 22 do not rotate (S1030), the controller 200 may change the sensing period of the force detection sensor 80 to a long sensing period (S1050), thereby reducing power consumption.

When the first and second driving wheels 21 and 22 do not rotate (S1030), this corresponds to a case in which the first and second motors 31 and 32 do not rotate based on the value detected by the force detection sensor 80. Thus, it can be seen that there is no value detected by the force detection sensor 80. Accordingly, it may be not necessary to store information about variation in the detected data.

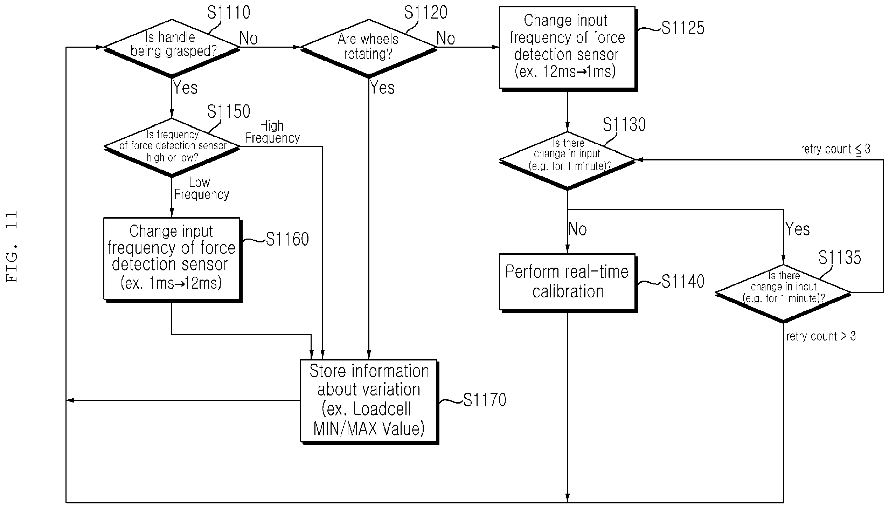

FIG. 11 is a flowchart showing an operation method of the stroller according to an embodiment of the present invention.

Referring to FIG. 11, the stroller according to an embodiment of the present invention may determine whether the handle 70 is being grasped by the user's hands (S1110). For example, the controller 200 may determine whether the user is grasping the handle 70 with the hands based on data detected by the force detection sensor 80 or the touch sensor (S1110).

According to an embodiment of the present invention, upon determining that the handle 70 is not being grasped by the user's hands (S1110), the controller 200 may determine whether the pair of driving wheels 20 is rotating (S1120). For example, the controller 200 may determine whether the first and second driving wheels 21 and 22 are being driven based on data detected by the wheel sensor (S1120).

Upon determining that the pair of driving wheels 20 does not rotate during the predetermined reference time (S1120 and S1130), the controller 200 may perform control such that the force detection sensor 80, which detects the force applied to the handle 70, is calibrated (S1140).

In some embodiments, whether there is a change in the input of the sensor unit 610 during the predetermined reference time may be determined (S1130). For example, it is possible to check a change in the input of the wheel sensor for 1 minute. In the case in which the pair of driving wheels 20 is temporarily stopped and then driven to rotate, it is not possible to complete the calibration. Even if calibration is completed, it may be inaccurate. Further, in the case of using a plurality of detection values according to a calibration method, it is possible to secure necessary detection values during the predetermined reference time. Accordingly, when the pair of driving wheels 20 is not driven during the predetermined reference time (S1120 and S1130), the force detection sensor 80 may be calibrated (S1140).

The controller 200 may adjust the zero point of the force detection sensor 80 based on existing data and the current detection value.

Alternatively, the controller 200 may adjust the zero point of the force detection sensor 80 based on the average of detection values collected during the calibration period or the most frequently collected detection value.

In some embodiments, the controller 200 may effectively process only a detection value falling within a predetermined reference range, and may use the processed detection value for adjustment of the zero point. Here, the reference range may have a range of initially set values, or may have a range of values updated based on data collected during the period of use by the current user. Accordingly, it is possible to adjust the zero point of the force detection sensor 80 using more accurate detection values.

The detection values used for adjustment of the zero point may be detection values collected during the calibration period (S1140). Alternatively, the detection values used for adjustment of the zero point may be detection values collected during the reference time (S1130) and the calibration period (S1140).

More preferably, the detection values used for adjustment of the zero point may be detection values collected during the reference time (S1130). In this case, the controller 200 is capable of determining to perform calibration after a period of time sufficient to obtain detection values to be used for calibration has elapsed. Accordingly, there is an advantage in that a separate time period is not required to acquire detection values.

Thereafter, the controller 200 controls the first and second motors 31 and 32 based on data detected by the force detection sensor 80, which has been calibrated, thereby enabling the stroller to be controlled more accurately.

In some embodiments, upon determining that the handle 70 is not being grasped by the user's hands (S1110) and that the first and second driving wheels 21 and 22 are not rotating (S1120), the controller 200 may change the sensing period of the force detection sensor 80 to a long sensing period (S1125). For example, when the current input frequency of the force detection sensor 80 is 12 ms, the input frequency may be changed to 1 ms (S1125).

When the first and second driving wheels 21 and 22 do not rotate (S1120), the need for detection related to travel by the force detection sensor 80 is reduced, and it is sufficient to obtain only the detection value necessary for calibration. Therefore, the controller 200 may change the sensing period so that the force detection sensor 80 acquires detection values at a longer period, thereby reducing power consumption.

Upon determining that the handle 70 is not being grasped by the user's hands (S1110) and that there is a change in the input value of the sensor unit 610, such as the wheel sensor, during the predetermined reference time (S1130), the controller 200 may perform control such that whether there is a change in the input value is repeatedly checked a predetermined number of times N (S1135).

Upon determining that the handle 70 is being grasped by the user's hands (S1110), the controller 200 may check the sensing period of the force detection sensor 80 (S1150), and may change the sensing period of the force detection sensor 80 to a short sensing period (S1160). For example, when the current input frequency of the force detection sensor 80 is 1 ms, the input frequency may be changed to 12 ms (S1160). The controller 200 may change the sensing period so that the force detection sensor 80 acquires detection values at a shorter period. Accordingly, it is possible to more accurately detect the force and torsion applied by the user who intends to grasp the handle 70 to operate the stroller.

The controller 200 may perform control such that information about variation in the data detected by the force detection sensor 80 is stored in the storage unit 620 (S1170). For example, the information about variation in the detected data may include the maximum value and the minimum value, among the values detected by the load cell.

That is, it is possible to manage the range of detection values according to the current user while storing information about variation in the detected data. Because the force with which respective persons push or pull the stroller is different, information about the variation may be used to change the setting of the predetermined reference range. Further, when the torque of the motor is controlled in proportion to the values detected by the force detection sensor 80, information about the variation may be used to determine the proportional value.

According to the embodiment of the present invention, it is possible to realize accurate detection and control of the motor by calibrating the force detection sensor 80 in various situations.

To this end, when the user does not operate the stroller and when the stroller is not moving, real-time calibration may be performed frequently. Accordingly, it is possible to minimize an error in detection.

According to the embodiment of the present invention, whether the user is operating the stroller may be determined based on detection of the user's hands by the force detection sensor 80 or the touch sensor of the handle. In addition, whether the stroller is moving may be determined based on detection of the rotation and speed of the wheels by the wheel sensor.

According to the embodiment of the present invention, when the conditions of calibration are satisfied, the sensing period of the force detection sensor 80 may be adjusted to a long period. If the sensing period of the force detection sensor 80 is adjusted to a long period in the calibration process, it is possible to reduce waste and consumption of current attributable to unnecessarily frequent detection.

In addition, the controller 200 may determine whether to perform calibration by analyzing detection values collected during a predetermined time period.

The controller 200 may adjust the zero point by immediately reflecting the change in the force detection sensor 80 through real-time calibration. Accordingly, it is possible to rapidly and accurately estimate an error in the detection values attributable to an unexpected change in the force detection sensor 80, thereby enabling the stroller to be controlled more accurately.

The stroller and the operation method thereof according to the embodiments of the present invention are not limited to the configurations and methods of the embodiments described above, but all or part of the embodiments may be selectively combined so as to be modified into various forms.

The operation method of a stroller according to the embodiment of the present invention may be implemented as processor-readable code on a processor-readable recording medium. The processor-readable recording medium includes all kinds of recording devices in which data capable of being read by a processor is stored. The processor-readable recording medium can also be distributed in network-coupled computer systems so that the processor-readable code is stored and executed in a distributed fashion.

As is apparent from the above description, according to at least one of the embodiments of the present invention, it is possible to minimize an error in a sensor provided at a stroller and to effectively manage the sensor.

In addition, according to at least one of the embodiments of the present invention, it is possible to more accurately control a stroller by calibrating a force detection sensor, which is provided at a handle in order to detect the magnitude and direction of the force applied to the handle by a user.

In addition, according to at least one of the embodiments of the present invention, it is possible to reduce power consumption by controlling the sensing period of a sensor depending on the situation.

In addition, according to at least one of the embodiments of the present invention, a motor for rotating a pair of driving wheels and a force detection sensor for detecting torsion of a handle with respect to a frame are included, so it is possible to reduce the force with which a user moves a stroller when the user moves the stroller on a slope, when the ground surface is bumpy, and when the user turns the stroller to the left or the right.

In addition, according to at least one of the embodiments of the present invention, the handle includes a left bar and a right bar, which are spaced apart from each other in a leftward-rightward direction at a position corresponding to the frame, and the force detection sensor, which detects the magnitude and direction of the force applied to the handle by a user, is mounted at one position in a manner of being connected to the left bar and the right bar and coupled to the frame, thereby increasing the freedom of design.

However, the effects achievable through the invention are not limited to the above-mentioned effects, and other effects not mentioned herein will be clearly understood by those skilled in the art from the above description.

## Claims

1. A stroller, comprising:
a body (10) having a pair of driving wheels (20) mounted to left and right sides thereof;
a motor (30) for rotating the pair of driving wheels (20);
a frame (50) comprising a lower part (51) connected to the body (10), the frame extending upwards from the lower part (51);
a handle (70) connected to the frame (50);
a sensor unit (610) comprising a force detection sensor configured to detect force applied to the handle (70), a touch sensor configured to detect whether the handle (70) is being grasped, and a wheel sensor configured to detect rotation of the pair of driving wheels (20); and
a controller (200) configured to control the force detection sensor;
**characterized in that**:
the controller (200) is configured to control the force detection sensor such that the force detection sensor is calibrated based on data detected by the touch sensor and the wheel sensor.

2. The stroller according to claim 1, wherein, upon determining that the handle (70) is not being grasped and that the pair of driving wheels (20) does not rotate during a predetermined reference time, the controller (200) is configured to perform control such that the force detection sensor is calibrated.

3. The stroller according to claim 1, or 2, wherein, upon determining that the handle (70) is not being grasped and that the pair of driving wheels (20) does not rotate during a predetermined reference time, the controller (200) is configured to change a sensing period of the force detection sensor to a long sensing period.

4. The stroller according to claim 1, 2, or 3, wherein, upon determining that the handle (70) is not being grasped and that the pair of driving wheels (20) rotates during a predetermined reference time, the controller (200) is configured to perform control such that whether the pair of driving wheels is rotating is repeatedly checked a predetermined number of times.

5. The stroller according to any one of claims 1 to 4, wherein, upon determining that the handle (70) is being grasped, the controller (200) is configured to check a sensing period of the force detection sensor.

6. The stroller according to claim 5, wherein, upon determining that the handle (70) is being grasped, the controller (200) is configured to change a sensing period of the force detection sensor to a short sensing period.

7. The stroller according to any one of claims 1 to 6, further comprising:
a storage unit (620),
wherein, upon determining that the handle (70) is being grasped or upon determining that the handle is not being grasped and that the pair of driving wheels (20) is rotating, the controller (200) is configured to perform control such that information about variation in data detected by the force detection sensor is stored in the storage unit.

8. The stroller according to any one of claims 1 to 7, wherein the controller (200) is configured to control the motor (30) based on data detected by the force detection sensor.

9. The stroller according to any one of claims 1 to 8, wherein the frame (50) is located in middle between the pair of driving wheels (20) in a leftward-rightward direction,
wherein the handle (70) comprises a left bar (71) and a right bar (72), the left bar (71) and the right bar (72) being spaced apart from each other in the leftward-rightward direction at a position corresponding to the frame (50), and
wherein the force detection sensor is connected to the left bar (71) and the right bar (72) and is coupled to the frame (50).

10. The stroller according to any one of claims 1 to 9, wherein the pair of driving wheels (20) comprises:
a first driving wheel (21) mounted to a left side of the body (10); and
a second driving wheel (22) mounted to a right side of the body (10),
wherein the motor (30) comprises:
a first motor (31) configured to rotate the first driving wheel (21); and
a second motor (32) configured to rotate the second driving wheel (22), and
wherein the controller (200) is configured to drive the first motor (31) and the second motor (32) based on magnitudes of force and torsion detected by the force detection sensor.

11. The stroller according to claim 9, wherein the force detection sensor comprises:
a first sensor unit (81) connected to the left bar (71);
a second sensor unit (82) connected to the right bar (72); and
a bracket (80) connecting the first sensor unit and the second sensor unit, the bracket (80) being coupled to the frame (50).

12. An operation method of a stroller, the method comprising:
detecting (S910) whether a handle (70) is being grasped; and
detecting (S920) whether a pair of driving wheels (20) is rotating when the handle (70) is not being grasped; and
is **characterized by**:
calibrating (S940) a force detection sensor configured to detect force applied to the handle (70) when the pair of driving wheels (20) does not rotate during a predetermined reference time.

13. The method according to claim 12, further comprising:
changing a sensing period of the force detection sensor to a long sensing period when the handle (70) is not being grasped and when the pair of driving wheels (20) does not rotate during the predetermined reference time.

14. The method according to claim 12, or 13, further comprising:
checking a sensing period of the force detection sensor when the handle (70) is being grasped,
changing a sensing period of the force detection sensor to a short sensing period.

15. The method according to claim 12, further comprising:
storing information about variation in data detected by the force detection sensor in a storage unit (620) when the handle (70) is being grasped or when the handle (70) is not being grasped and the pair of driving wheels (20) is rotating.

## Patentansprüche

1. Kinderwagen, der aufweist:
einen Körper (10) mit einem Paar Antriebsräder (20), die auf dessen linker und rechter Seite angebracht sind;
einen Motor (30) zum Drehen des Paars der Antriebsräder (20);
einen Rahmen (50), der einen unteren Teil (51) aufweist, der mit dem Körper (10) verbunden ist, wobei sich der Rahmen vom unteren Teil (51) nach oben erstreckt;
einen Griff (70), der mit dem Rahmen (50) verbunden ist;
eine Sensoreinheit (610), die einen Krafterfassungssensor aufweist, der konfiguriert ist, eine auf den Griff (70) ausgeübte Kraft zu erfassen, einen Berührungssensor, der konfiguriert ist zu erfassen, ob der Griff (70) gegriffen wird, und einen Radsensor, der konfiguriert ist, die Drehung des Paars von Antriebsrädern (20) zu erfassen; und
eine Steuerung (200), die konfiguriert ist, den Krafterfassungssensor zu steuern;
**dadurch gekennzeichnet, dass**:
die Steuerung (200) konfiguriert ist, den Krafterfassungssensor so zu steuern, dass der Krafterfassungssensor basierend auf den von dem Berührungssensor und dem Radsensor erfassten Daten kalibriert wird.

2. Kinderwagen nach Anspruch 1, wobei beim Feststellen, dass der Griff (70) nicht gegriffen wird und dass sich das Paar der Antriebsräder (20) während einer vorbestimmten Referenzzeit nicht dreht, die Steuerung (200) konfiguriert ist, eine Steuerung so durchzuführen, dass der Krafterfassungssensor kalibriert wird.

3. Kinderwagen nach Anspruch 1 oder 2, wobei beim Feststellen, dass der Griff (70) nicht gegriffen wird und dass sich das Paar der Antriebsräder (20) während einer vorbestimmten Referenzzeit nicht dreht, die Steuerung (200) konfiguriert ist, eine Erfassungsperiode des Krafterfassungssensors auf eine lange Erfassungsperiode zu ändern.

4. Kinderwagen nach Anspruch 1, 2 oder 3, wobei beim Feststellen, dass der Griff (70) nicht gegriffen wird und dass sich das Paar der Antriebsräder (20) während einer vorbestimmten Referenzzeit dreht, die Steuerung (200) konfiguriert ist, eine Steuerung so durchzuführen, dass wiederholt eine vorbestimmte Anzahl von Malen überprüft wird, ob sich das Paar der Antriebsräder dreht.

5. Kinderwagen nach einem der Ansprüche 1 bis 4, wobei beim Feststellen, dass der Griff (70) gegriffen wird, die Steuerung (200) konfiguriert ist, eine Erfassungsperiode des Krafterfassungssensors zu überprüfen.

6. Kinderwagen nach Anspruch 5, wobei beim Feststellen, dass der Griff (70) gegriffen wird, die Steuerung (200) konfiguriert ist, eine Erfassungsperiode des Krafterfassungssensors auf eine kurze Erfassungsperiode zu ändern.

7. Kinderwagen nach einem der Ansprüche 1 bis 6, der ferner aufweist:
eine Speichereinheit (620),
wobei beim Feststellen, dass der Griff (70) gegriffen wird oder beim Feststellen, dass der Griff nicht gegriffen wird und dass sich das Paar von Antriebsrädern (20) dreht, die Steuerung (200) konfiguriert ist, eine Steuerung so durchzuführen, dass Informationen über eine Variation von Daten, die vom Krafterfassungssensor erfasst werden, in der Speichereinheit gespeichert werden.

8. Kinderwagen nach einem der Ansprüche 1 bis 7, wobei die Steuerung (200) konfiguriert ist, den Motor (30) basierend auf den von dem Krafterfassungssensor erfassten Daten zu steuern.

9. Kinderwagen nach einem der Ansprüche 1 bis 8, wobei der Rahmen (50) in der Mitte zwischen dem Paar der Antriebsräder (20) in einer Links-Rechts-Richtung angeordnet ist, wobei der Griff (70) eine linke Stange (71) und eine rechte Stange (72) aufweist, wobei die linke Stange (71) und die rechte Stange (72) in der Links-Rechts-Richtung an einer dem Rahmen (50) entsprechenden Position voneinander beabstandet sind, und wobei der Krafterfassungssensor mit der linken Stange (71) und der rechten Stange (72) verbunden und mit dem Rahmen (50) gekoppelt ist.

10. Kinderwagen nach einem der Ansprüche 1 bis 9, wobei das Paar der Antriebsräder (20) aufweist:
ein erstes Antriebsrad (21), das auf einer linken Seite des Körpers (10) angebracht ist; und
ein zweites Antriebsrad (22), das auf einer rechten Seite des Körpers (10) angebracht ist, wobei der Motor (30) aufweist:
einen ersten Motor (31), der konfiguriert ist, das erste Antriebsrad (21) zu drehen; und
einen zweiten Motor (32), der konfiguriert ist, das zweite Antriebsrad (22) zu drehen, und
wobei die Steuerung (200) konfiguriert ist, den ersten Motor (31) und den zweiten Motor (32) basierend auf vom Krafterfassungssensor erfassten Größen der Kraft und Torsion anzutreiben.

11. Kinderwagen nach Anspruch 9, wobei der Krafterfassungssensor aufweist:
eine erste Sensoreinheit (81), die mit der linken Stange (71) verbunden ist;
eine zweite Sensoreinheit (82), die mit der rechten Stange (72) verbunden ist; und
einen Bügel (80), der die erste Sensoreinheit und die zweite Sensoreinheit verbindet, wobei der Bügel (80) mit dem Rahmen (50) gekoppelt ist.

12. Betriebsverfahren eines Kinderwagens, wobei das Verfahren aufweist:
Erfassen (S910), ob ein Griff (70) gegriffen wird; und
Erfassen (S920), ob sich ein Paar von Antriebsrädern (20) dreht, wenn der Griff (70) nicht gegriffen wird; und
**gekennzeichnet durch**:
Kalibrieren (S940) eines Krafterfassungssensors, der konfiguriert ist, eine auf den Griff (70) ausgeübte Kraft zu erfassen, wenn sich das Paar von Antriebsrädern (20) während einer vorbestimmten Referenzzeit nicht dreht.

13. Verfahren nach Anspruch 12, das ferner aufweist:
Ändern einer Erfassungsperiode des Krafterfassungssensors auf eine lange Erfassungsperiode, wenn der Griff (70) nicht gegriffen wird und wenn sich das Paar der Antriebsräder (20) während der vorbestimmten Referenzzeit nicht dreht.

14. Verfahren nach Anspruch 12 oder 13, das ferner aufweist:
Überprüfen einer Erfassungsperiode des Krafterfassungssensors, wenn der Griff (70) gegriffen wird,
Ändern einer Erfassungsperiode des Krafterfassungssensors auf eine kurze Erfassungsperiode.

15. Verfahren nach Anspruch 12, das ferner aufweist:
Speichern von Informationen über eine Variation von Daten, die vom Krafterfassungssensor erfasst werden, in einer Speichereinheit (620), wenn der Griff (70) gegriffen wird oder wenn der Griff (70) nicht gegriffen wird und sich das Paar der Antriebsräder (20) dreht.

## Revendications

1. Poussette, comprenant :
un corps (10) ayant une paire de roues motrices (20) montées sur son côté gauche et sur son côté droit ;
un moteur (30) destiné à entraîner la paire de roues motrices (20) en rotation ;
un montant (50) présentant une partie inférieure (51) raccordée au corps (10), ledit montant s'étendant vers le haut depuis la partie inférieure (51) ;
une poignée (70) raccordée au montant (50) ;
une unité de capteurs (610) comprenant un capteur de détection de force prévu pour détecter une force appliquée sur la poignée (70), un capteur tactile prévu pour détecter si la poignée (70) est agrippée, et un capteur de roue prévu pour détecter une rotation de la paire de roues motrices (20) ; et
un contrôleur (200) prévu pour commander le capteur de détection de force ;
**caractérisée en ce que** :
le contrôleur (200) est prévu pour commander le capteur de détection de force de sorte que le capteur de détection de force est étalonné sur la base de données détectées par le capteur tactile et le capteur de roue.

2. Poussette selon la revendication 1, où, par détermination que la poignée (70) n'est pas agrippée et que la paire de roues motrices (20) ne tourne pas pendant une durée de référence définie, le contrôleur (200) est prévu pour effectuer une commande de manière à étalonner le capteur de détection de force.

3. Poussette selon la revendication 1 ou la revendication 2, où, par détermination que la poignée (70) n'est pas agrippée et que la paire de roues motrices (20) ne tourne pas pendant une durée de référence définie, le contrôleur (200) est prévu pour modifier une période de détection du capteur de détection de force vers une longue période de détection.

4. Poussette selon la revendication 1, la revendication 2 ou la revendication 3, où, par détermination que la poignée (70) n'est pas agrippée et que la paire de roues motrices (20) tourne pendant une durée de référence définie, le contrôleur (200) est prévu pour effectuer une commande de manière à répéter un nombre de fois défini le contrôle si la paire de roues motrices tourne.

5. Poussette selon l'une des revendications 1 à 4, où, par détermination que la poignée (70) est agrippée, le contrôleur (200) est prévu pour contrôler une période de détection du capteur de détection de force.

6. Poussette selon la revendication 5, où, par détermination que la poignée (70) est agrippée, le contrôleur (200) est prévu pour modifier une période de détection du capteur de détection de force vers une courte période de détection.

7. Poussette selon l'une des revendications 1 à 6, comprenant en outre :
une unité de stockage (620),
où, par détermination que la poignée (70) est agrippée ou par détermination que la poignée n'est pas agrippée et que la paire de roues motrices (20) tourne, le contrôleur (200) est prévu pour effectuer une commande de manière à stocker dans l'unité de stockage des informations sur la variation des données détectées par le capteur de détection de force.

8. Poussette selon l'une des revendications 1 à 7, où le contrôleur (200) est prévu pour commander le moteur (30) sur la base de données détectées par le capteur de détection de force.

9. Poussette selon l'une des revendications 1 à 8, où le montant (50) est situé au milieu entre les deux roues motrices (20) dans la direction de la gauche vers la droite, où la poignée (70) comprend une barre gauche (71) et une barre droite (72), la barre gauche (71) et la barre droite (72) étant espacées l'une de l'autre dans la direction de la gauche vers la droite à un emplacement correspondant au montant (50), et où le capteur de détection de force est raccordé à la barre gauche (71) et à la barre droite (72) et est relié au montant (50).

10. Poussette selon l'une des revendications 1 à 9, où la paire de roues motrices (20) comprend :
une première roue motrice (21) montée sur un côté gauche du corps (10) ; et
une deuxième roue motrice (22) montée sur un côté droit du corps (10),
où le moteur (30) comprend :
un premier moteur (31) prévu pour entraîner la première roue motrice (21) en rotation ; et
un deuxième moteur (32) prévu pour entraîner la deuxième roue motrice (22) en rotation, et
où le contrôleur (200) est prévu pour entraîner le premier moteur (31) et le deuxième moteur (32) sur la base d'amplitudes de force et de torsion détectées par le capteur de détection de force.

11. Poussette selon la revendication 9, où le capteur de détection de force comprend :
une première unité de capteurs (81) raccordée à la barre gauche (71) ;
une deuxième unité de capteurs (82) raccordée à la barre droite (72) ; et
un support (80) raccordant la première unité de capteurs à la deuxième unité de capteurs, ledit support (80) étant relié au montant (50).

12. Procédé de fonctionnement d'une poussette, ledit procédé comprenant :
la détection (S910) si une poignée (70) est agrippée ; et
la détection (S920) si une paire de roues motrices (20) tourne quand la poignée (70) n'est pas agrippée ; et **caractérisé par** :
l'étalonnage (S940) d'un capteur de détection de force prévu pour détecter une force appliquée sur la poignée (70) quand la paire de roues motrices (20) ne tourne pas pendant une durée de référence définie.

13. Procédé selon la revendication 12, comprenant en outre :
la modification d'une période de détection du capteur de détection de force vers une longue période de détection quand la poignée (70) n'est pas agrippée et quand la paire de roues motrices (20) ne tourne pas pendant la durée de référence définie.

14. Procédé selon la revendication 12 ou la revendication 13, comprenant en outre :
le contrôle d'une période de détection du capteur de détection de force quand la poignée (70) est agrippée,
la modification d'une période de détection du capteur de détection de force vers une courte période de détection.

15. Procédé selon la revendication 12, comprenant en outre :
la stockage dans une unité de stockage (620) d'informations sur la variation des données détectées par le capteur de détection de force quand la poignée (70) est agrippée ou quand la poignée (70) n'est pas agrippée et la paire de roues motrices (20) tourne.
